# EUROPEAN PATENT APPLICATION

(11) **EP 2 372 831 A1**
(43) Date of publication of application: **05.10.2011**
(21) Application number: 10275030.4
(22) Date of filing: 30.03.2010
(51) Int. Cl.: H01P 1/213, H04B 7/185

(54) **Output multiplexer**

(71) Applicant: Astrium Limited, Stevenage, Hertfordshire SG1 2AS (GB)
(72) Inventor: The designation of the inventor has not yet been filed
(74) Representative: Bruce, Alexander Richard Henry

(57) **Abstract**

According to the present invention, there is provided an output multiplexer OMUX comprising a plurality of hybrid-coupled filters. Each hybrid-coupled filter may be arranged to receive a first signal and a second signal via first and second input ports respectively, and output the first signal and the second signal via first and second output ports respectively, and the OMUX may be arranged to combine a plurality of said first signals into a first multiplexed signal and combine a plurality of said second signals into a second multiplexed signal.

## Description

The present invention relates to an output multiplexer (OMUX). More particularly, the present invention relates to an OMUX comprising a plurality of hybrid-coupled filters.

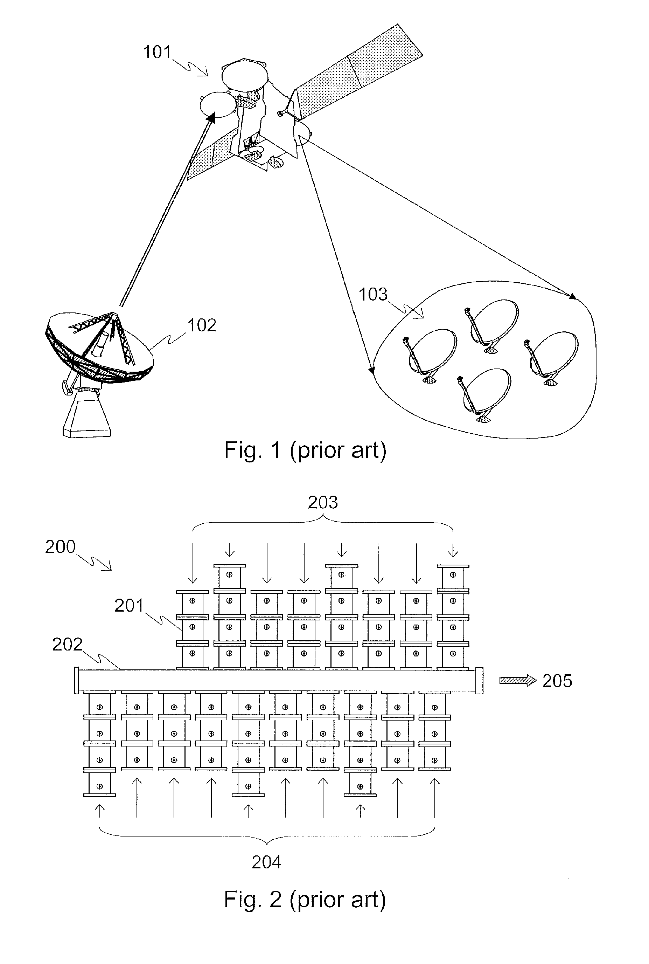

Communications satellites are widely used for providing telecommunications links between different locations on the Earth's surface. Figure 1 illustrates an example of a conventional satellite communication system. A communications satellite 101 receives a frequency-multiplexed signal from an uplink antenna 102. The satellite 101 demultiplexes the received signal into a number of channels, and amplifies the signal on each channel. An output multiplexer (OMUX) is used to recombine the amplified signals into a high-power multiplexed output signal, which is transmitted to a plurality of ground-based receivers 103.

Figure 2 illustrates a conventional OMUX for use on a communications satellite. The OMUX 200 comprises a plurality of filters 201 arranged along a manifold 202, and hence may be referred to as a manifold multiplexer. The OMUX 200 receives a plurality of input signals 203, 204, which are combined in the manifold 201 and outputted as a multiplexed output signal 205. However, as there is considerable interaction between filters on different input channels, manifold multiplexers are complicated to design and tune. Designing and tuning the OMUX 200 becomes progressively more complex as additional input channels are added, making it impractical to produce a manifold multiplexer with more than ∼20 input channels.

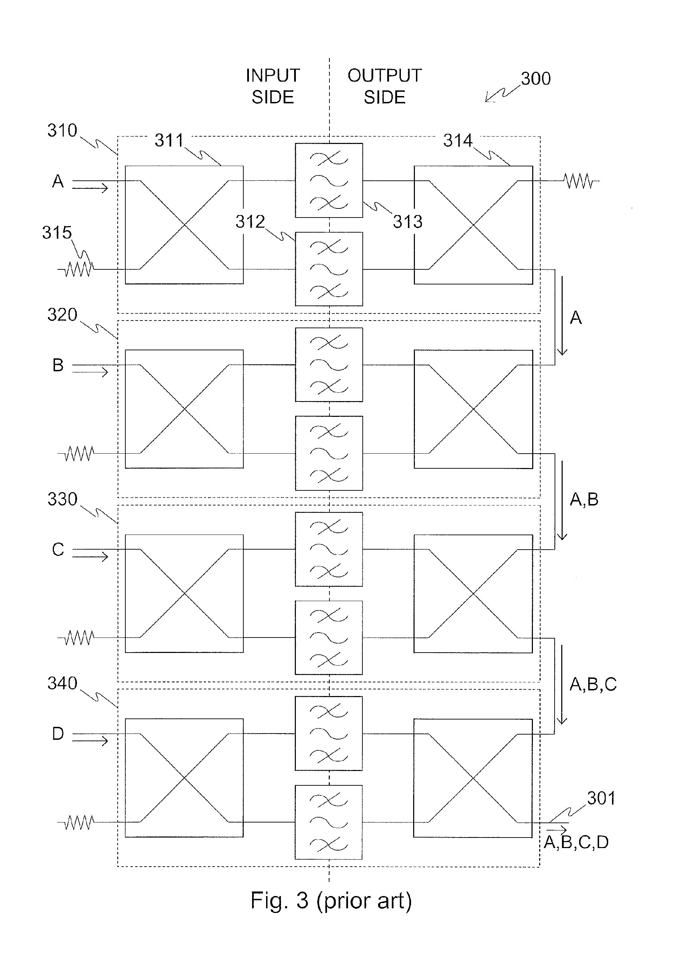

Figure 3 illustrates a conventional hybrid-coupled OMUX 300, which is commonly used in ground-based applications. The hybrid-coupled OMUX 300 comprises a plurality of hybrid-coupled filters 310, 320, 330, 340. Each hybrid-coupled filter 310 comprises an input hybrid coupler 311 which splits an input signal into two half-power signals. These half-power signals are passed through two filters 312, 313 3 and recombined by an output hybrid 314. Therefore, as two filters are required per input channel, the conventional hybrid-coupled OMUX has a significantly increased mass in comparison to a manifold multiplexer. As a result, hybrid-coupled OMUXs are unsuitable for use in communications satellites, where any increase in weight may significantly increase the launch cost.

The present invention aims to address the drawbacks inherent in known arrangements.

According to the present invention, there is provided an output multiplexer OMUX comprising a plurality of hybrid-coupled filters, each arranged to receive a first input signal via a first input port and a second input signal via a second input port, and output a first output signal via a first output port and a second output signal via a second output port, wherein the OMUX is arranged to combine a plurality of said first output signals into a first multiplexed signal and combine a plurality of said second output signals into a second multiplexed signal.

Each one of the hybrid-coupled filters may comprise first and second hybrid couplers, with first and second bandpass filters connected between the first and second hybrid couplers.

The first and second input ports may comprise input ports of the first hybrid coupler, and the first and second output ports may comprise output ports of the second hybrid coupler.

The first and second bandpass filters of any one of the plurality of hybrid-coupled filters may be arranged to have substantially similar transfer functions.

The first and second bandpass filters may be arranged to be controllable so as to tune at least one of a centre frequency and a passband width.

The plurality of hybrid-coupled filters may comprise a number N of hybrid-coupled filters, wherein the first multiplexed signal may be outputted via an output port of an Nth one of the hybrid-coupled filters, and the second multiplexed signal may be outputted via an output port of a first one of the hybrid-coupled filters.

The OMUX may further comprise at least one bidirectional connection between adjacent ones of the hybrid-coupled filters, the bidirectional connection being arranged to carry the first and second output signals in opposite directions.

The first multiplexed signal may be arranged to be transmitted as a vertically polarised signal, and the second multiplexed signal may be arranged to be transmitted as a horizontally polarised signal.

The first and second input signals of each one of the plurality of hybrid-coupled filters may either correspond to downlink channels having the same frequencies, or may correspond to downlink channels which are adjacent in frequency.

The plurality of first input signals and the plurality of second input signals may comprise microwave signals having frequencies in the Ku band.

The OMUX may be configured for use in a communications satellite.

According to the present invention, there is also provided apparatus comprising the OMUX and means for combining the first and second multiplexed signals.

The means for combining may comprise an orthogonal mode transducer OMT, the OMT being arranged to receive the first and second multiplexed signals and output a combined signal to a reflector antenna, wherein the combined signal comprises the first multiplexed signal as a vertically polarised signal and the second multiplexed signal as a horizontally polarised signal.

The means for combining may comprise first and second feed horns of a reflector antenna, the first feed horn being arranged to receive the first multiplexed signal and the second feed horn being arranged to receive the second multiplexed signal, and wherein the first and second feed horns and the reflector antenna are arranged to combine the first and second multiplexed signals in space.

According to the present invention, there is further provided a hybrid-coupled filter for use in the OMUX, the hybrid-coupled filter comprising a first hybrid coupler having first and second input ports, a second hybrid coupler having first and second output ports, and a plurality of filters connected between the first and second hybrid couplers, wherein the hybrid-coupled filter is arranged to receive the first input signal via the first input port and the second input signal via the second input port, and output the first output signal via the first output port and the second output signal via the second output port.

Embodiments of the invention will now be described, by way of example, with reference to the accompanying drawings, in which:
Figure 1 illustrates a conventional satellite communications system, according to the prior art;
Figure 2 illustrates a manifold multiplexer for use on a communications satellite, according to the prior art;
Figure 3 illustrates a hybrid-coupled OMUX for use in ground-based applications, according to the prior art;
Figures 4a and 4b illustrate a hybrid-coupled filter according to an example of the present invention;
Figure 5 illustrates a hybrid-coupled OMUX according to an example of the present invention;
Figures 6a and 6b illustrate the allocation of frequencies within the Ku band;
Figure 7 illustrates frequency-shifting of blocks within the A band for inputting into a hybrid-coupled OMUX, according to an example of the present invention;
Figure 8 illustrates a hybrid-coupled OMUX according to an example of the present invention;
Figure 9 illustrates an output section of a communications satellite, according to an example of the present invention;
Figure 10 illustrates an output section of a communications satellite, according to another example of the present invention;
Figure 11 illustrates an output section of a communications satellite, according to a further example of the present invention;
Figure 12 illustrates an output section of a communications satellite, according to a further example of the present invention;
Figure 13 illustrates the allocation of frequencies within the input signals of Fig. 12, and the corresponding passbands of each hybrid-coupled filter, according to an example of the present invention; and
Figures 14a and 14b illustrate a hybrid-coupled OMUX comprising tunable bandpass filters, according to an example of the present invention.

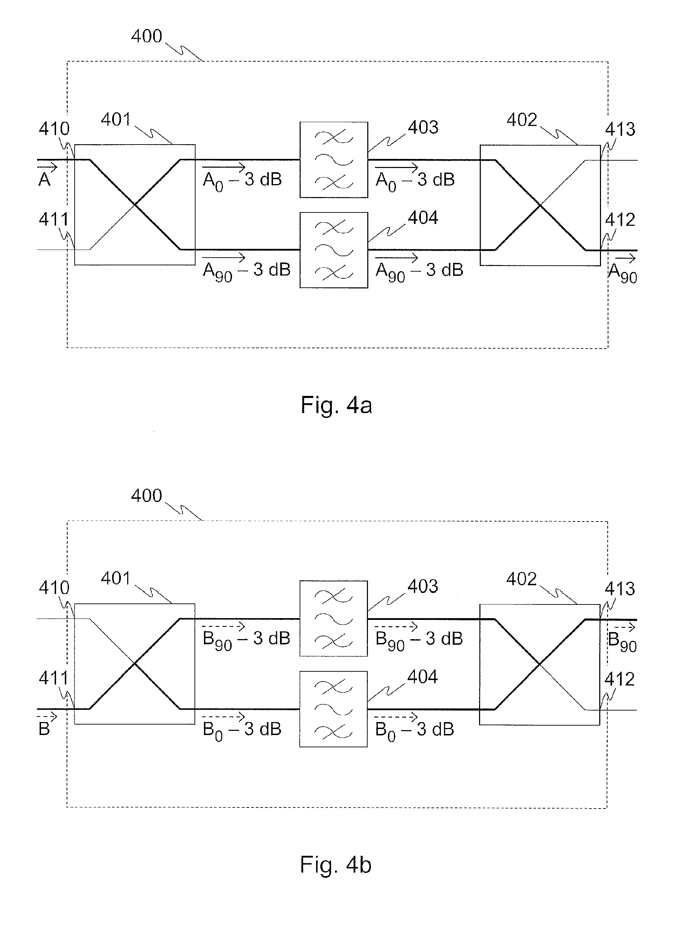

Referring now to Figs. 4a and 4b, a hybrid-coupled filter for use in a hybrid-coupled OMUX is illustrated according to an example of the present invention. The hybrid-coupled filter 400 comprises a first hybrid coupler 401 and a second hybrid coupler 402, with a first bandpass filter 403 and a second bandpass filter 404 connected between the hybrid couplers 401, 402. Both the first and second bandpass filters 403, 404 are arranged to have similar transfer functions, i.e. the similar passband widths and centre frequencies.

In Fig. 4a the path taken by a signal A through the hybrid-coupled filter 400 is illustrated in bold. The signal A is input to a first port 410 of the first hybrid coupler 401, which splits the signal into two signals, each having half the power of the original input signal A. A signal emerging from one output port (the "transmitted" port) is in-phase with the original input signal. In Fig. 4a, this signal is shown as A₀― 3 dB, the subscript indicating that the signal is phase-shifted by zero degrees (i.e. in phase), and the - 3 dB indicating that the signal is reduced in power by 3 dB (i.e. 50%). A signal emerging from the other output port (the "coupled" port) is phase-shifted by ninety degrees with respect to the original input signal A. In Fig. 4a, this signal is shown as A₉₀ ― 3 dB.

As shown in Fig. 4a, each of the half-power signals (A₀ ― 3 dB; A90 — 3 dB) passes through one of the bandpass filters 403, 404. The signals are substantially unchanged by the bandpass filters 403, 404, since the input signal A is arranged to only contain frequencies lying within both bandpass filters 403, 404. The half-power signals are then input to the second hybrid coupler 402.

A first output port 412 of the second hybrid coupler 402 acts as the coupled port for the in-phase signal, i.e. A₀ ― 3 dB, hence this signal is phase-shifted by ninety degrees and outputted as A₉₀ ― 3 dB. The first output port 412 acts as the transmitted port for the phase-shifted signal, i.e. A₉₀ ― 3 dB, hence this signal is unchanged and outputted as A₉₀ ― 3 dB. Therefore, at the first output port 412, these signals are in-phase and add together, the overall result being that the signal outputted from this port is A₉₀, i.e. phase-shifted by ninety degrees with respect to the input signal A, and with substantially the same power as the input signal A.

Similarly, at a second output port 413 of the second hybrid coupler 402, the signals are out-of-phase (i.e. A₀ ― 3 dB and A₁₈₀ ― 3 dB). Therefore the signals cancel, and no signal is outputted from the second output port 413.

In prior art examples of hybrid-coupled filters, a second port of the input hybrid is unused and is terminated by a matched load (cf. matched load 315 of Fig. 3). However, in the present example as shown in Figs. 4a and 4b, a second port 411 of the first hybrid coupler 401 is used as an input port for a second signal B. The operation of the hybrid-coupled filter 401 on this second signal B will now be described with reference to Fig. 4b.

In Fig. 4b the path taken by a signal B through the hybrid-coupled filter 400 is illustrated in bold. The first and second hybrid couplers 401, 402 operate on the second signal B in a similar manner to that described previously for the first signal A, and so a detailed description will be omitted. In brief, the first hybrid coupler 401 splits the second signal B into two half-power signals, B₀ ― 3 dB and B₉₀ ― 3 dB. These pass through the first and second bandpass filters 403, 404, are recombined by the second hybrid coupler 402, and outputted from the second output port 413 3 as the output signal B₉₀.

The first signal A and the second signal B may be simultaneously input to the first hybrid coupler 401. Therefore, in the present example, the hybrid-coupled filter 400 is able to simultaneously receive and output two separate signals, unlike prior art hybrid-coupled filters which may only receive a single input signal.

Furthermore, in the present example, the first bandpass filter 403 and the second bandpass filter 404 are each used for both input signals A and B. Therefore it is only necessary to provide two bandpass filters for two input signals, unlike prior art hybrid-coupled filters which require two bandpass filters for a single input signal.

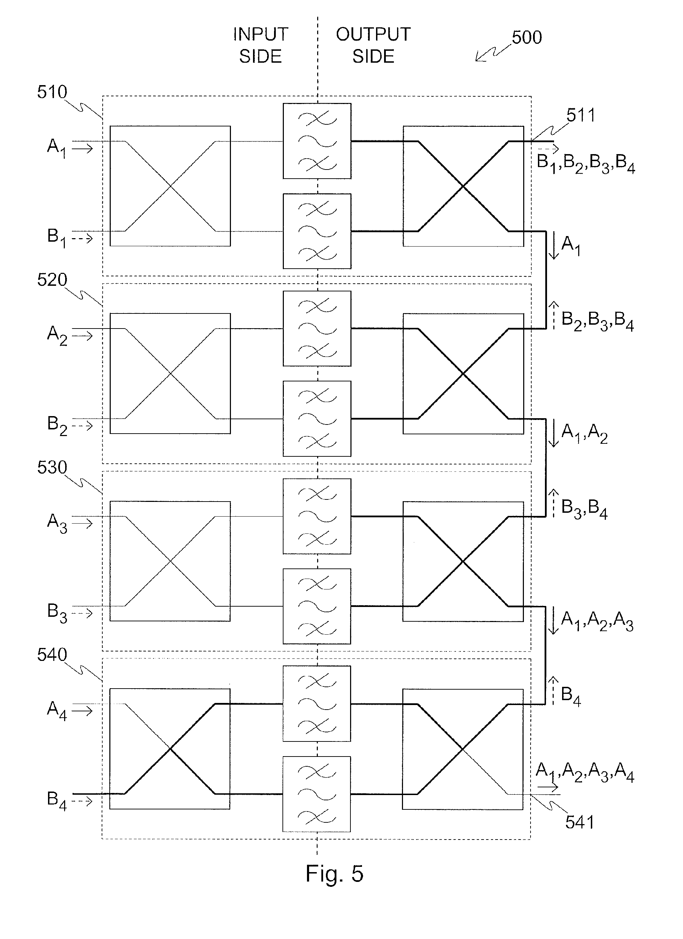

Referring now to Fig. 5, a hybrid-coupled OMUX is illustrated according to an example of the present invention. The hybrid-coupled OMUX 500 comprises first, second, third and fourth hybrid-coupled filters 510, 520, 530, 540, each of which is substantially similar to the hybrid-coupled filter 400 of Figs. 4a and 4b. To avoid confusion, in the present example subscripts are used to denote signals input to a particular one of the hybrid-coupled filters, rather than to denote any specific phase relationship. For example, A₁ and B₁ denote signals input to the first hybrid-coupled filter 510, A₂ and B₂ denote signals input to the second hybrid-coupled filter, and so on. In Fig. 5, a path taken by a second signal B₄ input to a second input port of the fourth hybrid-coupled filter, is shown in bold.

The first hybrid-coupled filter 510 receives a first signal A₁ via an input hybrid coupler, and outputs the first signal A₁ via the corresponding output port of an output hybrid coupler. Once on the output side of the hybrid-coupled OMUX 300, the first signal A₁ is unable to pass through the bandpass filters of any of the remaining hybrid-coupled filters 520, 530, 540, since these bandpass filters are arranged to reject any frequencies within the first signal A₁. Specifically, the bandpass filters within each hybrid-coupled filter are arranged to pass wanted frequencies within the first and second input signals, and reject other frequencies.

The bandpass filters within a hybrid-coupled filter therefore effectively act as one-way gates, allowing an input signal through to the output side of the hybrid-coupled OMUX 500 but preventing other signals from exiting. In this way, a plurality of first input signals A₁, A₂, A₃, A₄ are combined on the output side of the hybrid-coupled OMUX 500, and outputted as a first multiplexed signal via a first output port 541 of the hybrid-coupled OMUX 500.

The plurality of second signals B₁, B₂, B₃, B₄ are similarly combined on the output side of the hybrid-coupled OMUX 500, but travel through the output side in an opposite direction to the plurality of first signals A₁, A₂, A₃, A₄. Therefore, the plurality of second signals B₁, B₂, B₃, B₄ are outputted as a second multiplexed signal via a second output port 511 of the hybrid-coupled OMUX 500.

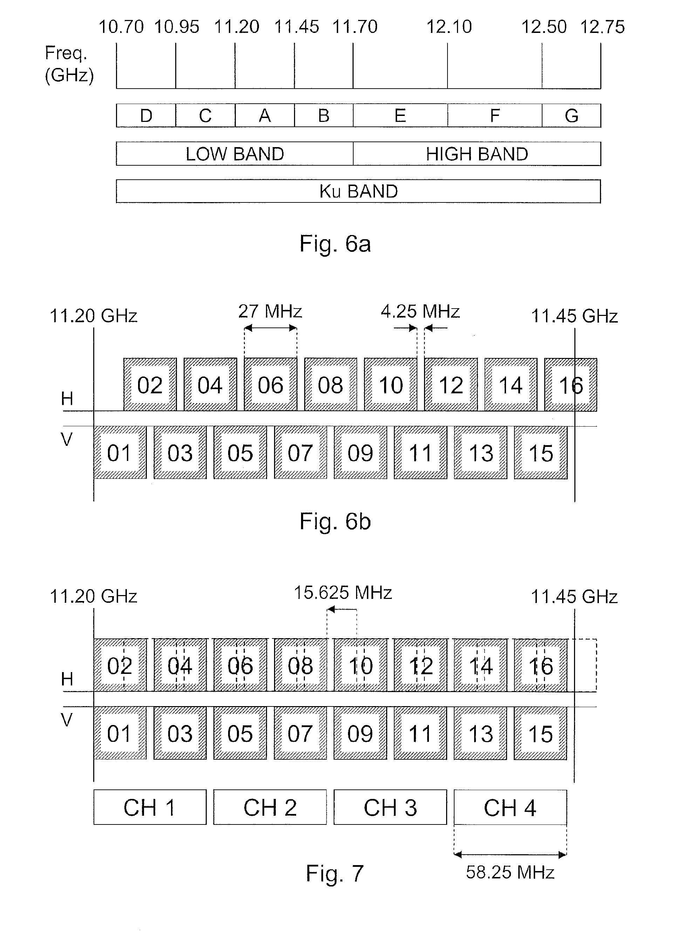

Referring now to Figs. 6a and 6b, the allocation of frequencies within the Ku band is illustrated. As shown in Fig. 6a, the Ku band is subdivided into low band and high band frequencies, with low-band being used for fixed satellite services (FSS) and high-band being used for broadcast satellite services (BSS). The low-band is further divided into A, B, C and D bands, whilst the high-band is further divided into E, F and G bands.

As shown in Fig. 6b, the A band is further subdivided into sixteen frequency blocks 01-16, of which the odd-numbered blocks are transmitted with a vertical (V) polarisation, and the even-numbered blocks are transmitted with a horizontal polarisation (H). Each block is 27 MHz wide, with a guard interval of 4.25 MHz between adjacent blocks.

An orthogonal mode transducer (OMT) may be used in order to transmit the horizontally polarised and vertically polarised signals via the same antenna. Specifically, a first input port of the OMT is arranged to vertically polarise an input signal, whilst a second input port is arranged to horizontally polarise an input signal. Therefore, the OMT may allow two input signals of the same frequency to be transmitted via the same antenna, by polarising the two signals with respect to one another.

Examples of the present invention will now be described in which one or more hybrid-coupled OMUXs are used to provide multiplexed signals for transmission as either horizontally polarised signals or vertically polarised signals. The skilled person will appreciate that in these examples, the first and second input signals are not actually polarised with respect to one another as they travel through the OMUX, since they pass through the same waveguide and filters. The horizontal and vertical polarisation may be applied later, by inputting the first and second multiplexed signals to respective inputs of an OMT. However, for clarity, signals which are intended to be transmitted with a horizontal polarisation will hereinafter be denoted by an 'H', whilst signals which are intended to be transmitted with a vertical polarisation will be denoted by a 'V'.

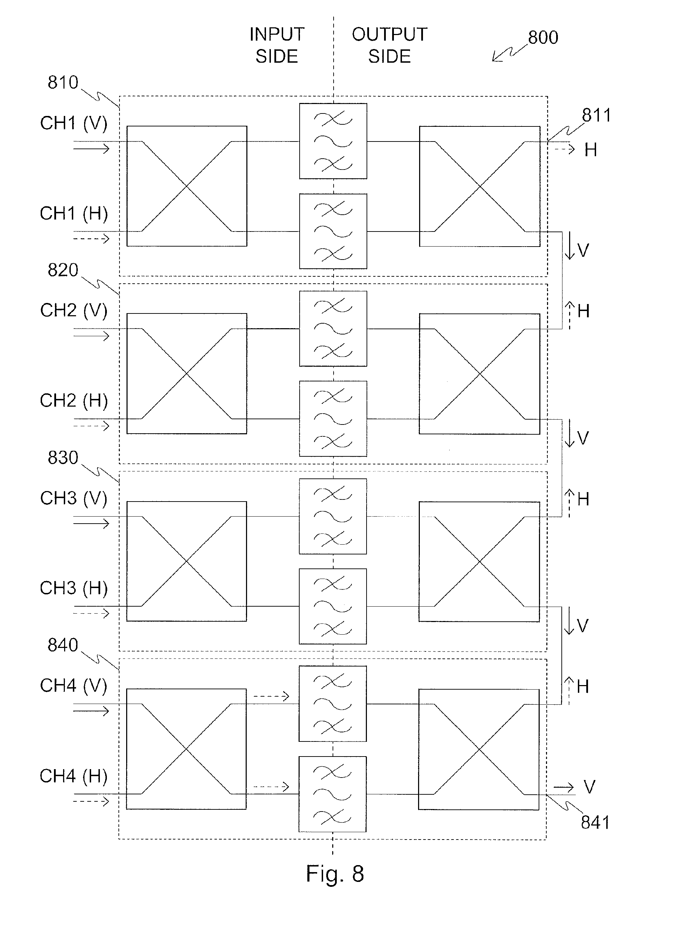

According to an example of the present invention, the first multiplexed signal from a hybrid-coupled OMUX may be arranged to be transmitted as a vertically polarised signal, and the second multiplexed signal may be arranged to be transmitted as a horizontally polarised multiplexed signal. This will now be described with reference to Figs. 7 and 8.

Figure 7 illustrates frequency-shifting of blocks within the A band for inputting into the hybrid-coupled OMUX 800 of Fig. 8, according to an example of the present invention. The hybrid-coupled OMUX 800 comprises first, second, third and fourth hybrid-coupled filters 810, 820, 830, 840, and functions in a substantially similar manner to the hybrid-coupled OMUX 500 of Fig. 5. As such, a detailed description will be omitted in order to maintain brevity.

Before the H signals (i.e. signals to be transmitted with a horizontal polarisation) are input into the hybrid-coupled OMUX 800, they are shifted down in frequency by 15.625 MHz in order to align with the V signals (i.e. signals to be transmitted with a horizontal polarisation). Two H signals and two V signals are then allocated to one of four 58.25 MHz channels, CH1, CH2, CH3, or CH4.

In Fig. 8, CH1 (V) denotes an input signal containing frequencies within blocks 01 and 03 of Fig. 7, whilst CH1 (H) denotes an input signal containing frequencies within blocks 02 and 04. Similarly, CH2 (V) contains blocks 05 and 07, CH2 (H) contains blocks 06 and 08, CH3 (V) contains blocks 09 and 11, CH3 (H) contains blocks 10 and 12, CH4 (V) contains blocks 13 and 15, and CH4 (H) contains blocks 14 and 16.

Taking the first hybrid-coupled filter 810 as an example, the bandpass filters within the first hybrid-coupled filter 810 are arranged to have a passband covering all frequencies within the first channel of Fig. 7, i.e. CH1. Therefore, signals having frequencies within blocks 01, 02, 03 and 04 are permitted to pass through the bandpass filters, whilst any other frequencies (e.g. blocks 05 to 16) are rejected. Similarly, the bandpass filter of the second hybrid-coupled filter 820 are arranged to pass frequencies within blocks 05 to 08, the bandpass filter of the third hybrid-coupled filter 830 are arranged to pass frequencies within blocks 09 to 12, and the bandpass filter of the fourth hybrid-coupled filter 840 are arranged to pass frequencies within blocks 13 to 16.

As the V signals are input into the first input port of each hybrid-coupled filter, the V multiplexed signal is outputted via an output port of the fourth hybrid-coupled filter 840, i.e. a first output port 841 of the OMUX 800. Conversely, as the H signals are input into the second input port of each hybrid-coupled filter, the H polarised multiplexed signal is outputted via an output port of the first hybrid-coupled filter 810, i.e. a second output port 811 of the OMUX 800.

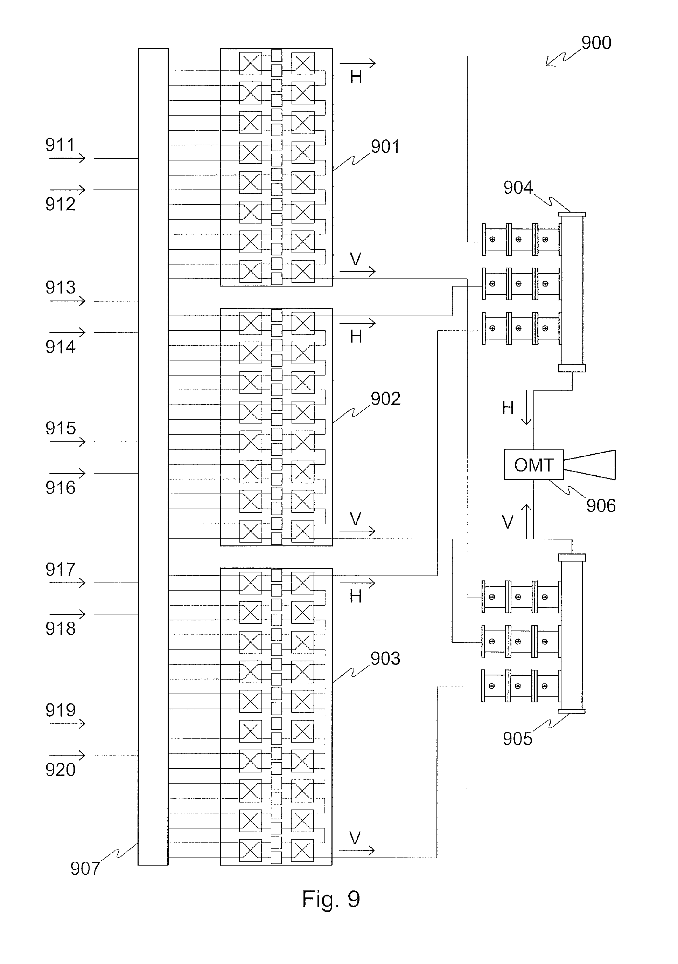

Various exemplary output section architectures of a communications satellite will now be described with reference to Figs. 9 to 13, according to examples of the present invention.

Referring now to Fig. 9, an output section of a communications satellite is illustrated according to an example of the present invention. The output section 900 comprises first, second and third hybrid-coupled OMUXs 901, 902, 903, each of which may be similar in structure to the hybrid-coupled OMUX shown in Fig. 8. In the present example, the first hybrid-coupled OMUX 901 is arranged to receive input signals within the C-band of the Ku band (cf. Fig. 6a), the second hybrid-coupled OMUX 902 is arranged to receive input signals within the A-band of the Ku band, and the third hybrid-coupled OMUX 903 is arranged to receive input signals within the E-band of the Ku band. Therefore the first hybrid-coupled OMUX 901 covers the frequency range 10.95 - 11.20 GHz, the second hybrid-coupled OMUX 902 covers the frequency range 11.20 - 11.45 GHz, and the third hybrid-coupled OMUX 903 covers the frequency range 11.70 - 12.10 GHz.

In the present example, not all channels of the hybrid-coupled OMUXs 901, 902, 903 are utilised at the same time. For example, some channels may not be required during normal operation of the communications satellite, but may be provided for redundancy, i.e. to back up channels of another satellite in the event of a failure on that satellite. Therefore, a switching block 907 is provided to route a plurality of input signals 911, 912, 913, 914, 915, 916, 917, 918, 919, 920 to appropriate channels of the hybrid-coupled OMUXs 901, 902, 903.

The output section 900 further comprises a first manifold multiplexer 904 and a second manifold multiplexer 905. The first manifold multiplexer 904 is arranged to receive the H multiplexed signals from each of the first, second and third hybrid-coupled OMUXs 901, 902, 903. Specifically, a first filter of the first manifold multiplexer 904 is arranged to have a passband from 10.95 GHz - 11.20 GHz, and to receive the H multiplexed signal from the first hybrid-coupled OMUX 901. Similarly, the second and third filters of the first manifold multiplexer 904 are arranged to have passbands from 11.20 - 11.45 GHz and 11.70 - 12.10 GHz respectively, and receive the H multiplexed signals from the second and third hybrid-coupled OMUXs 902, 903, respectively.

The second manifold multiplexer 905 is arranged to receive the V multiplexed signals from each of the first, second and third hybrid-coupled OMUXs 901, 902, 903. Specifically, a first filter of the second manifold multiplexer 905 is arranged to have a passband from 10.95 GHz - 11.20 GHz, and to receive the V multiplexed signal from the first hybrid-coupled OMUX 901. Similarly, the second and third filters of the second manifold multiplexer 905 are arranged to have passbands from 11.20 - 11.45 GHz and 11.70 - 12.10 GHz respectively, and receive the V multiplexed signals from the second and third hybrid-coupled OMUXs 902, 903, respectively.

Output signals from the first and second manifold multiplexers 904, 905 are then passed to an orthogonal mode transducer (OMT) 906. The OMT 906 horizontally polarises the H signals and vertically polarises the V signals, and outputs the horizontally polarised H signals and vertically polarised V signals to a feed horn of a downlink reflector dish (not shown).

The output section 900 illustrated in Fig. 9 may offer a substantially advantage over prior art arrangements, since the majority of the multiplexing is performed by hybrid-coupled OMUXs. As discussed above, hybrid-coupled OMUXs according to examples of the present invention only require a single filter per input signal, and therefore may not have a significantly increased weight in comparison to a manifold multiplexer. However, because there is little or no interaction between filters of a hybrid-coupled OMUX, the time and effort required to design and tune the OMUXs of Fig. 9 may be significantly reduced, and hence the overall cost may also be reduced.

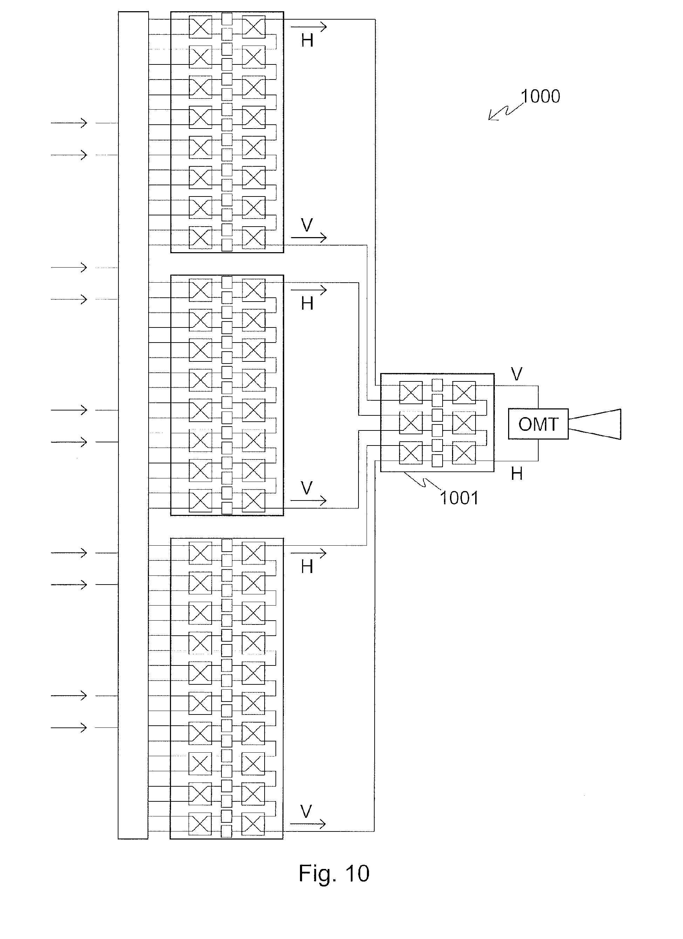

Referring now to Fig. 10, an output section of a communications satellite is illustrated according to another example of the present invention. The output section 1000 is substantially similar in many respects to the output section 900 of Fig. 9, and so a detailed description will be omitted in order to maintain brevity. However, the output section 1000 of the present example differs in that instead of combining the H multiplexed signals and V multiplexed signals in manifold multiplexers, they are combined in another hybrid-coupled OMUX 1001. This arrangement may offer a further cost saving over the arrangement shown in Fig. 9, since the hybrid-coupled OMUX 1001 may be simpler to manufacture than the manifold multiplexers.

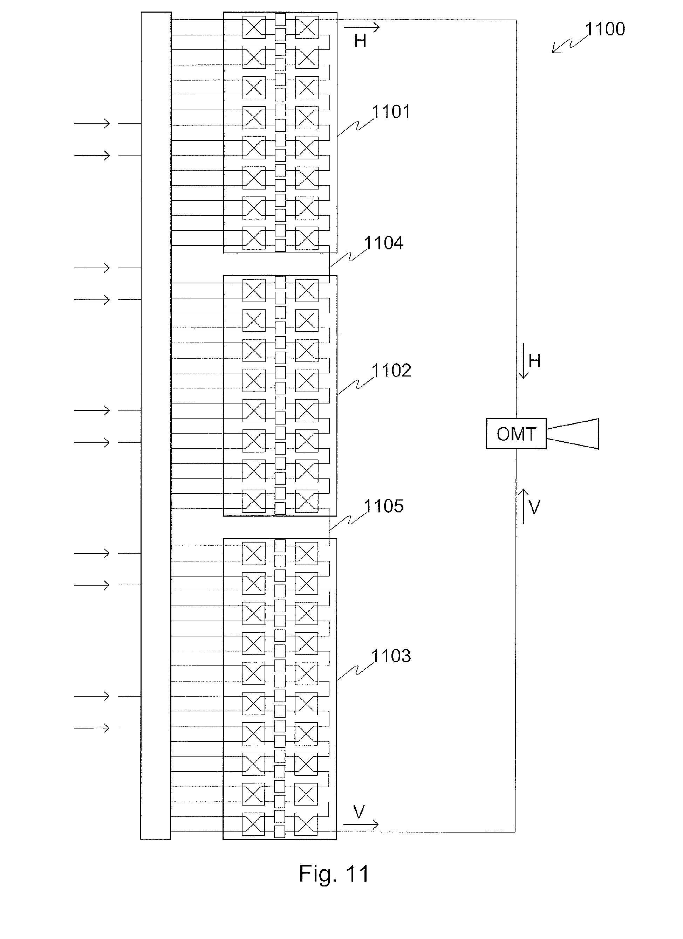

Referring now to Fig. 11, an output section of a communications satellite is illustrated according to a further example of the present invention. The output section 1100 is substantially similar in many respects to the output sections 900, 1000 of Figs. 9 and 10, and so a detailed description will be omitted in order to maintain brevity. However, the output section 1100 of the present example differs in that connections 1104, 1105 are provided between the first, second and third hybrid-coupled OMUXs 1101, 1102, 1103. This allows the first, second and third hybrid-coupled OMUXs 1101, 1102, 1103 to perform the full multiplexing operation, providing a single H multiplexed signal and a single V multiplexed signal to the OMT.

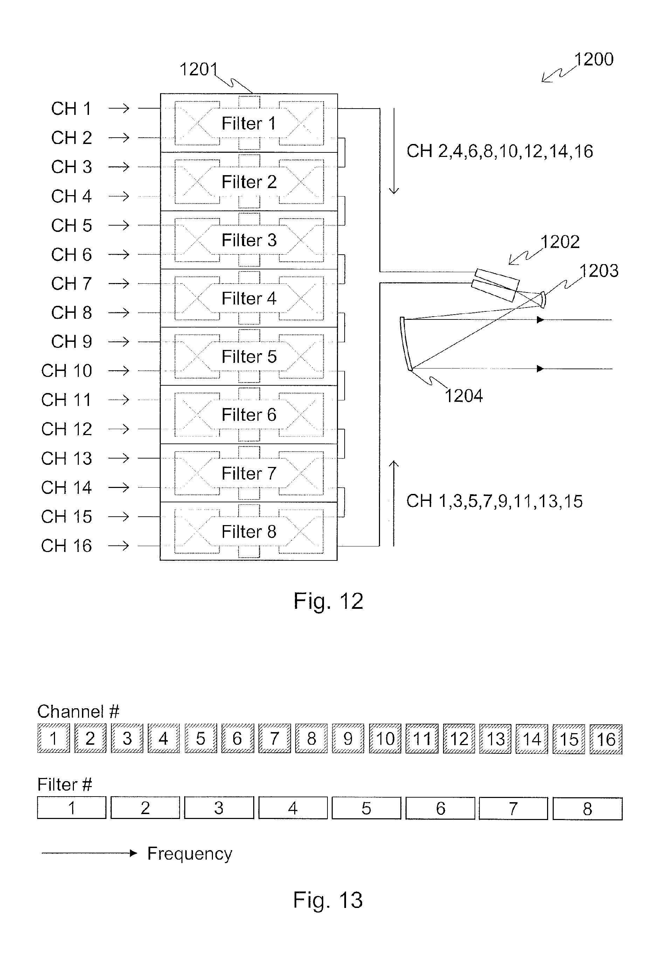

Although examples of the present invention have been described in which a hybrid-coupled OMUX is provided for separately multiplexing H signals and V signals, other arrangements are possible. For example, Figs. 12 and 13 illustrate an output section of a communications satellite, according to a further example of the present invention, in which all input channels are intended for transmission with the same polarisation.

As shown in Fig. 12, a hybrid-coupled OMUX is provided which comprises eight hybrid-coupled filters, arranged to receive a total of sixteen input signals. Figure 13 illustrates the allocation of frequencies within the input signals of Fig. 12, and the corresponding passbands of each hybrid-coupled filter. Adjacent ones of the input channels 1 to 16 are input into each hybrid-coupled filter. Specifically, odd-numbered channels are input to the first input port of each hybrid-coupled filter, and even-numbered channels are input to the second input port of each hybrid-coupled filter. Accordingly, the hybrid-coupled OMUX 1201 outputs a first multiplexed signal comprising the odd-numbered channels, and a second multiplexed signal comprising the even-numbered channels. The first and second multiplexed signals are then sent to first and second feed horns 1202 respectively, and combined in space by primary and secondary reflectors 1203, 1204.

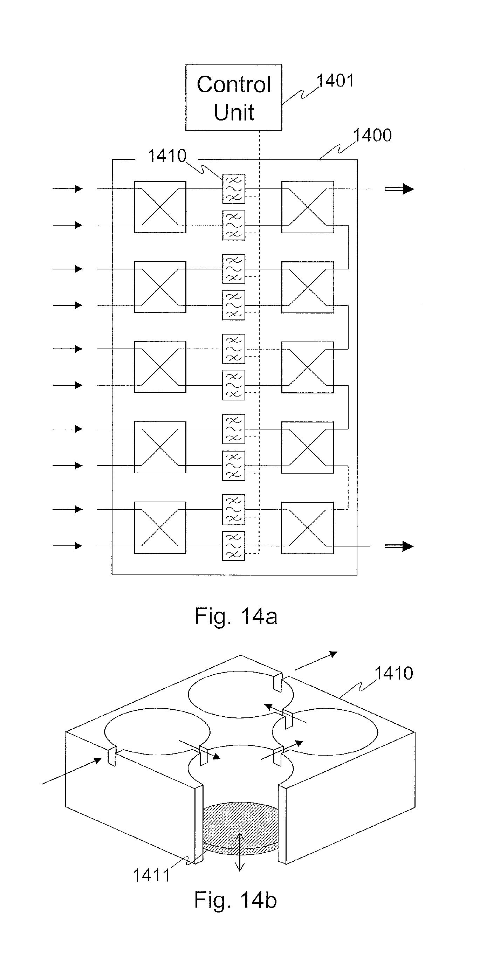

Referring now to Figs. 14a and 14b, a hybrid-coupled OMUX 1400 comprising tunable bandpass filters is illustrated, according to an example of the present invention. The filters operating on a pair of input channels (i.e. the first and second inputs of a hybrid-coupled filter) may be tuned independently of the filters for different input channels, as there is minimal interaction between the different filters of a hybrid-coupled OMUX. As shown in Fig. 14a, a control unit 1401 may be provided for controlling the filter pairs of the OMUX 1400. When the OMUX 1400 is provided for use on a communications satellite, the control unit 1401 may be configured to allow the filters to be tuned remotely by a ground-based operator whilst the satellite is in orbit.

Figure 14b illustrates a tunable bandpass filter for use in the hybrid-coupled OMUX 1400 shown in Fig. 14a, according to an example of the present invention. The tunable bandpass filter 1410 comprises four interconnected resonant cavities having moveable end plates 1411, which can be remotely adjusted so as to adjust a centre frequency at which the filter operates. The tunable bandpass filter 1410 is one example of a tunable bandpass filter which may be suitable for use in a tunable hybrid-coupled OMUX, and other filter designs are possible.

The hybrid-coupled OMUX 1400 of Fig. 14a offers a substantial technical advantage over conventional manifold multiplexers, in which the interaction between different filters means that it is not possible to tune one filter without affecting the behaviour of the remaining filters. This may be particularly advantageous, for example, when the OMUX 1400 is provided to back-up channels of another satellite in the event of failure. Because a conventional manifold multiplexer cannot be retuned when in orbit, it would be necessary to provide large manifold multiplexer with a separate input channel for every channel which is required to be backed-up. However, a tunable hybrid-coupled OMUX 1400 such as the one shown in Fig. 14a may be provided with fewer input channels, which may then be retuned as necessary in the event of a failure of another satellite. Therefore, a tunable hybrid-coupled OMUX 1400 with relatively few input channels may allow a single satellite to provide back-up for multiple other satellites.

Whilst certain embodiments of the present invention have been described above, it will be clear to the skilled person that many variations and modifications are possible while still falling within the scope of the invention as defined by the claims.

For example, although hybrid-coupled OMUXs have been described in which each hybrid-coupled filter comprises a single input hybrid coupler and a single output hybrid coupler with two bandpass filters connected therebetween, other arrangements are possible. In some examples, input and output hybrid networks comprising a plurality of hybrid couplers may be provided, with the number of bandpass filters being increased accordingly.

Additionally, in some examples of the present invention, each bandpass filter may be replaced with tunable low-pass and high-pass filters connected in series. This arrangement may allow a passband width of the hybrid-coupled filter to be adjusted, by tuning one of the low-pass of high-pass filters accordingly.

Furthermore, although examples of the present invention have been described in relation to multiplexing microwave Ku band signals, the skilled person will appreciate that the present invention is not limited thereto. In other examples of the present invention, hybrid-coupled OMUXs may be provided for multiplexing signals of other frequencies.

## Claims

1. An output multiplexer OMUX (500) comprising:
a plurality of hybrid-coupled filters (510, 520, 530, 540), each arranged to receive a first input signal via a first input port (410) and a second input signal via a second (411) input port, and output a first output signal via a first output port (412) and a second output signal via a second (413) output port;
wherein the OMUX is arranged to combine a plurality of said first output signals into a first multiplexed signal and combine a plurality of said second output signals into a second multiplexed signal.

2. The OMUX of claim 1, wherein each one of the hybrid-coupled filters comprises first and second hybrid couplers, with first and second bandpass filters connected between the first and second hybrid couplers.

3. The OMUX of claim 2, wherein the first and second input ports comprise input ports of the first hybrid coupler, and
wherein the first and second output ports comprise output ports of the second hybrid coupler.

4. The OMUX of claim 2 or 3, wherein the first and second bandpass filters of any one of the plurality of hybrid-coupled filters are arranged to have substantially similar transfer functions.

5. The OMUX of claim 4, wherein the first and second bandpass filters are arranged to be controllable so as to tune at least one of a centre frequency and a passband width.

6. The OMUX of any preceding claim, wherein the plurality of hybrid-coupled filters comprises a number N of hybrid-coupled filters, and
wherein the first multiplexed signal is outputted via an output port of an N^{th} one of the hybrid-coupled filters, and the second multiplexed signal is outputted via an output port of a first one of the hybrid-coupled filters.

7. The OMUX of any preceding claim, further comprising at least one bidirectional connection between adjacent ones of the hybrid-coupled filters, the bidirectional connection being arranged to carry the first and second output signals in opposite directions.

8. The OMUX of any preceding claim, wherein the first multiplexed signal is arranged to be transmitted as a vertically polarised signal, and the second multiplexed signal is arranged to be transmitted as a horizontally polarised signal.

9. The OMUX of any one of claims 1 to 8, wherein the first and second input signals of each one of the plurality of hybrid-coupled filters either correspond to downlink channels having the same frequencies, or correspond to downlink channels which are adjacent in frequency.

10. The OMUX of any preceding claim, wherein the plurality of first input signals and the plurality of second input signals comprise microwave signals having frequencies in the Ku band.

11. The OMUX of any preceding claim, wherein the OMUX is configured for use in a communications satellite.

12. Apparatus comprising:
the OMUX of any preceding claim; and
means for combining the first and second multiplexed signals.

13. The apparatus according to claim 12, wherein the means for combining comprises an orthogonal mode transducer OMT, the OMT being arranged to receive the first and second multiplexed signals and output a combined signal to a reflector antenna, and
wherein the combined signal comprises the first multiplexed signal as a vertically polarised signal and the second multiplexed signal as a horizontally polarised signal.

14. The apparatus according to claim 12, wherein the means for combining comprises first and second feed horns of a reflector antenna, the first feed horn being arranged to receive the first multiplexed signal and the second feed horn being arranged to receive the second multiplexed signal, and
wherein the first and second feed horns and the reflector antenna are arranged to combine the first and second multiplexed signals in space.

15. A hybrid-coupled filter for use in the OMUX of any one of claims 1 to 11, the hybrid-coupled filter comprising:
a first hybrid coupler (401) having first (410) and second (411) input ports;
a second hybrid coupler (402) having first (412) and second (413) output ports; and
a plurality of filters (403, 404) connected between the first and second hybrid couplers,
wherein the hybrid-coupled filter is arranged to receive the first input signal via the first input port and the second input signal via the second input port, and output the first output signal via the first output port and the second output signal via the second output port.
